Europäisches Patentamt

(19) European Patent Office

Office européen des brevets

(11) Publication number: 0 214 825
A2

# (12) EUROPEAN PATENT APPLICATION

(21) Application number: 86306716.1

(22) Date of filing: 29.08.86

(51) Int. Cl.⁴: **F 16 F 7/10**
**B 60 K 5/12, B 60 K 17/22**

(30) Priority: 13.09.85 US 776071

(43) Date of publication of application:
18.03.87 Bulletin 87/12

(84) Designated Contracting States: DE FR GB

(71) Applicant: FORD MOTOR COMPANY LIMITED
Eagle Way
Brentwood Essex CM13 3BW (GB)

FORD-WERKE AKTIENGESELLSCHAFT
Ottoplatz 2 Postfach 21 03 69
D-5000 Köln 21 (DE)

FORD FRANCE SOCIETE ANONYME
344 Avenue Napoléon Bonaparte B.P. 307
F-92506 Rueil Malmaison Cedex (FR)

(72) Inventor: Paliga, Walter V.
6676 Parkway Circle
Dearborn Heights Michigan 48127 (US)

(74) Representative: Messulam, Alec Moses et al
A. Messulam & Co. 24 Broadway
Leigh on Sea Essex SS9 1BN (GB)

(54) Vibration damper.

(57) A vibration damper for a machine includes a damping mass (18a.18b). means (10a,10b,14,16) for suspending the damping mass from a machine so as to produce damping within the suspension means when the damper is vibrated by the machine, and means (20a.20b) for elastically mounting the damping mass to the suspension means. The damping produced within the suspension means may be either viscoelastic or hysteretic or both. One or more viscoelastic elements (20,20b) is preferably interposed between the damping mass (18a,18b) and the suspension means (10a,10b,14,16) so as to produce viscoelastic damping. The vibration damper may be tuned so as to produce three or fewer frequencies by virtue of the action of the suspension means as well as three or fewer additional frequencies arising from the elastic mounting of the damping mass (18a,18b) to the suspension means (10a,10b,14,16).

FIG. 1.

**Description**

VIBRATION DAMPER

This invention relates generally to a vibration damper for use with machinery and particularly to a novel vibration damper for use with automotive vehicles.

Motor vehicles and other machines driven by internal combustion engines often present a difficult problem to designers faced with the task of either eliminating or reducing unwanted vibrations arising from the driving engine. It is well known to those skilled in the art that vibrations arising from internal combustion engines occur at various engine speeds and at various frequencies. These vibrations can be transmitted throughout the machine to which the engine is attached. The problem of isolating or damping vibrations arising from internal combustion engines is particularly acute in the case of the automobile because of the proximity of the passengers to the engine and its associated drive train components. The severity of this problem has been exacerbated in recent years by widespread use of lighter gauge metals in automobile body construction as well as by the use of diesel engines and gasoline engines having higher specific outputs such as those engines which are turbocharged. As compared with conventional gasoline engines, both diesel engines and gasoline engines with higher specific outputs such as turbocharged engines tend to vibrate at higher energy levels over more dispersed frequency spectra. This fact renders the control of unwanted vibration from these powerplants more troublesome because various frequencies must be treated.

U.S. patent 1,638,782 discloses a system for damping excessive rocking or vibration of the engine of a motor vehicle caused by synchronization of the explosions of the engine with the natural period of vibration of its supporting means. A multiple leaf spring secured at one end to the engine supports a mass at its opposite end. This device is capable of absorbing vibration at only a single tuned frequency. U.S. patents 2,707,032 and 3,232,384 disclose vibration dampers having mass blocks suspended upon compressed resilient elements. Each of these vibration dampers is intended to be fixed to the extension housing of a vehicle transmission. Because the resilient weight-supporting components used in each of these absorbers is under compression, the frequency response of each could be expected to be adjusted only with difficulty during the production process because it has been found that small changes in the compression of resilient elements cause relatively large excursions in the frequency response of absorbers using compressed resilient elements. Another difficulty with each of these absorbers is that a maximum of two frequencies may be tuned.

U.S. patent 1,917,094 discloses a motor suspension including vibration dampers comprising cantilevered mass blocks suspended from spring control arms. Although this system is tunable, it provides only single-frequency damping for each unit.

Automobile designers and engineers have attempted many systems involving resilient mounting of power train components in their efforts to reduce vibrations arising from the automotive power plant. Examples of resilient mountings including springs or elastomeric materials are disclosed in U.S. patents 1,752,809; 1,996,166; 1,650,001; 3,191,710; and 3,236,326. Each of these systems lacks a suspended mass block for absorbing the energy of vibration. As a result, each system will function primarily by isolating the vibrating engine from the machine to which it is attached rather than by dynamically damping vibrations of the engine and/or power train systems.

U.S. patent 2,271,935 discloses a vibration damper for an overhead cable including a resiliently mounted mass block.

U.S. patent 3,552,694 discloses a passive vibration isolator for attaching one body, which is desired to be vibration free, to a vibration producing body.

Ford Motor Company Shop Manual for 1982 model Lincoln Town Car/Continental Mark VI, and Ford/Mercury Vehicles, at page 18/01-9, discloses a transmission extension damper including a bracket rigidly attached to the transmission extension housing and a mass rigidly attached to the bracket. This type of transmission extension damper will provide only hysteretic damping --that is, damping produced within the arms of the bracket.

It is an object of the present invention to provide a vibration damper producing damping not only within the means for suspending an associated damping mass but also within the means for mounting the damping mass to the suspension means.

It is a further object of the present invention to provide a tunable vibration damper which may be tuned to provide damping at up to six different frequencies.

It is yet a further object of the invention to provide a tunable damper which is easily adjustable to respond to different frequencies.

It is a still further object of the present invention to provide a tunable vibration damper for use with diesel or other power plants exhibiting high-energy vibrations.

According to the invention there is provided a vibration damper for a machine comprising a damping mass (18a,18b) suspension means, (10a,10b,14, 16) for suspending said damping mass (18a,18b) from said machine so as to produce damping within said suspension means when said damper is vibrated by said machine, and means (20a,20b) for elastically mounting said damping mass (18a,18b) to said suspension means.

The damping produced within the suspension means may be either viscoelastic or hysteretic or both. One or more resilient elements is preferably interposed between the damping mass and the suspension means so as to produce viscoelastic damping. The vibration damper may by tuned so as to produce three or fewer frequencies by virtue of the action of the suspension means as well as three of fewer additional frequencies arising from the elastic mounting of the damping mass to the suspension means.

More particularly, the suspension means comprises a space frame for mounting the damping mass to the vibrating machine. The space frame preferably comprises one or more structural elements with each such element tuned to dampen vibration occurring at a particular frequency. The space frame may utilize laminated construction with one or more relatively inelastic layers combined with viscoelastic materials.

The vibration damper is adjustable inasmuch as it includes tunable legs which may be altered to produce various frequency responses. Adjustability may also be provided by changing either the magnitude or the location of the damping mass. Adjustability is further possible with changes of the dimensions and composition of the resilient elements interposed between the damping mass and the space frame.

The invention will now be described further by way of example with reference to the accompanying drawings in which:

Figure 1 shows the vibration damper of the present invention attached to an internal combustion engine and the engine's associated transmission and transmission extension housing.

Figure 2 is an exploded perspective view of the vibration damper of the present invention.

Figure 3 is a side elevation of the vibration damper shown in Figure 1.

Figure 4 is a rear elevation of the vibration damper shown in Figure 1.

Figure 5 is a section of a structural composite suitable for constructing part of the vibration damper of the present invention.

Figure 6 is a second structural composite suitable for constructing part of the vibration damper of the present invention.

Figure 7 is a completely separable vibration damper with individually replaceable tuning legs.

Figures 8-11 each illustrate different designs for tunable legs suitable for use with the vibration damper shown in Figure 7.

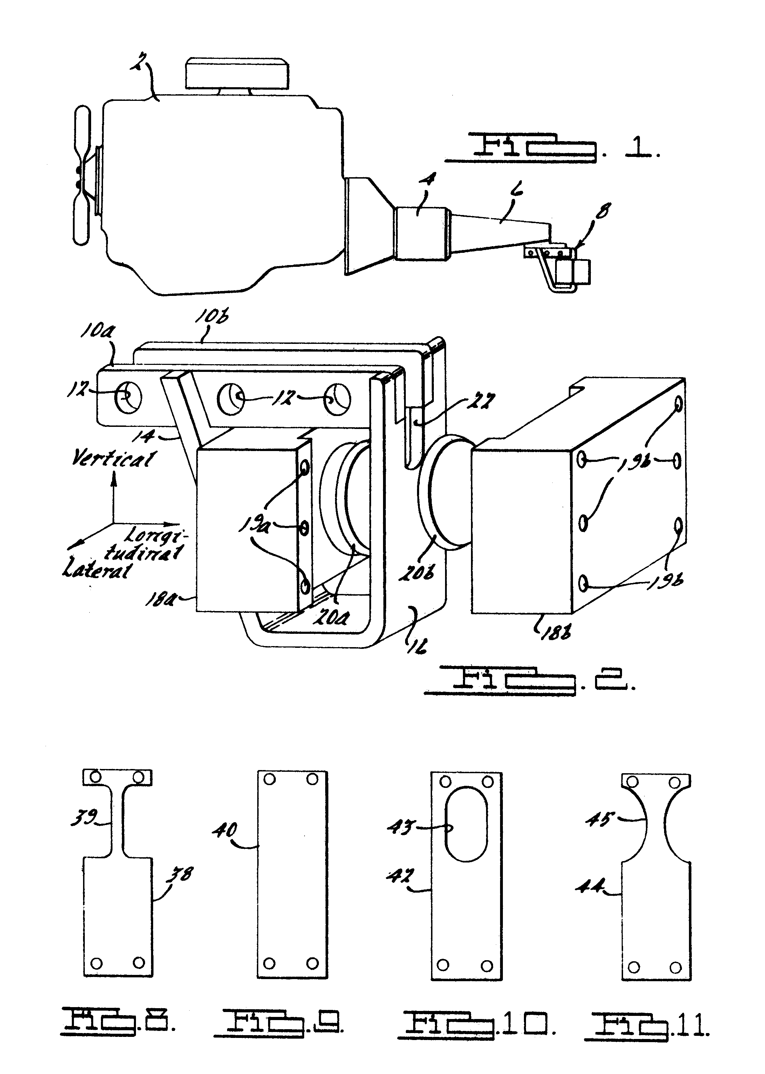

As shown in Figure 1, the vibration damper of the present invention may be used in conjunction with a vehicle powertrain including an internal combustion engine 2, transmission 4, and transmission extension housing 6. The present vibration damper is well suited for attachment to a vehicle powertrain in the vicinity of the transmission extension housing. It has been found that dynamic bending of a powertrain assembly comprised of an engine and a transmission may produce objectionable vibration which is susceptible to damping through usage of the vibration damper of the present invention. Without wishing to be bound by the following discussion of the theory of operation of the present vibration damper, it is believed that the device of this invention operates by absorbing the energy in the vibrating engine or other machine and converting that energy into vibratory movement of the damping mass having a greater amplitude than the vibrations of the vibrating machine. The energy of vibration is eventually dissipated by the damping within the means for suspending the damping mass as well as by the viscoelastic damping elements provided between the damping mass and the suspension means. For the purpose of this document, viscoelastic materials are defined as those which dissipate vibrational energy principally as a result of linear (Newtonian) viscosity. This type of energy dissipation will be termed "viscoelastic damping". The term "hysteretic damping" will be employed to refer to energy dissipation within a solid material associated with its stress-strain hysteresis loop. Both types of damping are discussed in the Shock and Vibration Handbook. McGraw-Hill Book Company, 1961.

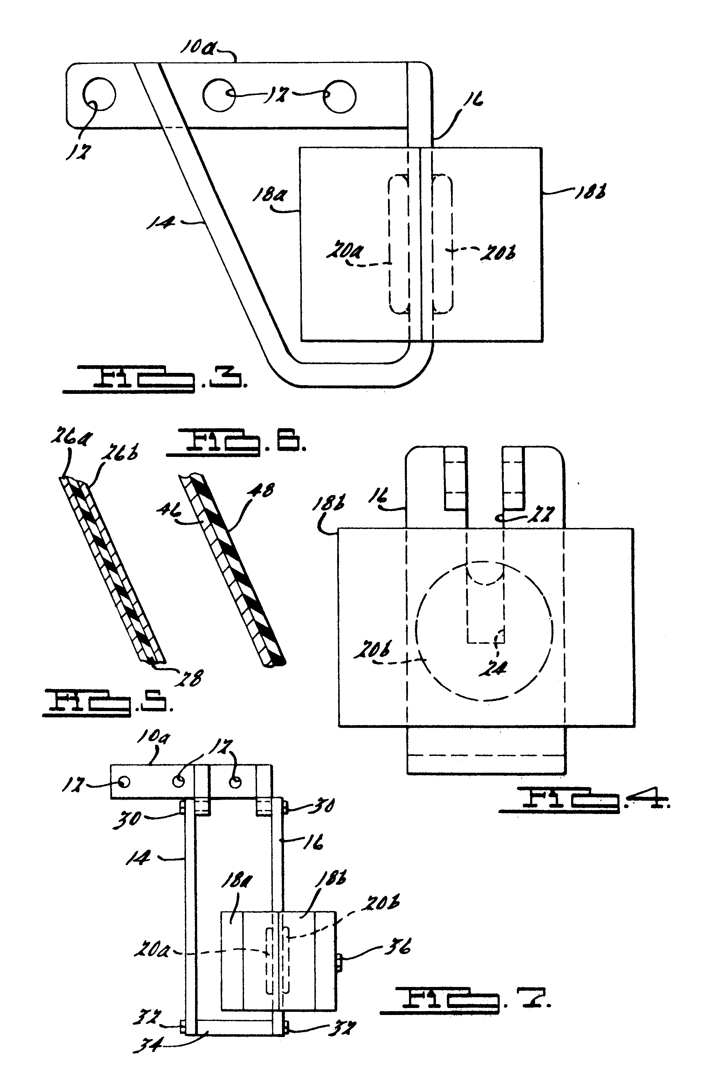

As shown in Figures 2-4, a preferred embodiment of the present invention includes mounting bracket beams 10a and 10b, which are preferably mounted in a generally horizontal position to the vibrating machine by means of fasteners passing through mounting bracket holes 12. Anterior leg 14 and posterior leg 16 depend from mounting bracket beams 10a and 10b. In the embodiment illustrated in Figures 2-4, the legs are joined together in a single unitary member. The mounting bracket beams and anterior and posterior legs thus form a means for suspending a damping mass comprising mass blocks 18a and 18b from posterior leg 16. This means is termed a "space frame" in this Application. The space frame may be constructed of mild steel, or other ferrous or non-ferrous metals or plastic composite materials. The anterior and posterior legs may be attached to the mounting bracket beams by welding, or by mechanical fasteners, or by any other means well known to those skilled in the art.

Viscoelastic material 20a and 20b is interposed between the damping mass 18a and 18b and the space frame. Viscoelastic material 20 produces viscoelastic damping when mass 18 is shaken by the vibrating machine. Hysteretic damping is produced within the space frame at the same time.

Tests have indicated that the use of viscoelastic elements to mount the mass block to the space frame greatly increases the ability of the present device to dampen vibrations occurring not only at precise, clear frequencies, but also at frequencies adjoining the several tuned frequencies of the damper. This result is important because a damper having the capability for operation only within a narrow bandwidth will not be effective against vibration occurring outside that bandwidth. This fact is significant because production tolerance changes which are involved in the construction of automobiles and many other machines may be expected to alter a machine's vibration characteristics. A wideband damper constructed according to the present invention will tolerate such changes, whereas a narrow-band damper might very well not.

It has been determined that vibrations having up to six separate frequencies may be damped by the present vibration damper. As shown in Figure 2, a three axis coordinate system using three orthogonal directions may be imposed upon the damper of the present invention and utilized to explain the potential for obtaining vibration damping at six separate frequencies. The space frame itself may be arranged to produce damping at up to three separate frequencies. One frequency, in the vertical direction, may be tuned by changing the vertical height of the mounting bracket beams. A second frequency, in the lateral direction, may be tuned by changing the lateral width of anterior leg 14 and posterior leg 16 as well as the length and width of the tuning notches 24 and 22 formed in the legs. The longitudinal frequency response of the space frame may be varied by changing the section thickness of the anterior and posterior legs.

Three additional damping frequencies are available by utilizing changes in the viscoelastic material interposed between tuning mass 18 and the space frame. The viscoelastic material shown in the Figures comprises two circular elements. These elements will produce a discrete tuning frequency in the longitudinal direction due to their compression. The damping frequency produced in the vertical and lateral directions will be identical to each other because of the symmetry of the viscoelastic material as shown. Thus, two frequencies will be tuned--one in the longitudinal direction and a second frequency in the lateral and vertical directions. Lateral and vertical forces acting upon the damper subject the viscoelastic material to shear stresses resulting in damped movement of the mass. In the event that the viscoelastic material 20 is given a rectangular rather than a circular cross section, the vibration frequencies in the vertical and lateral directions will be different and a three frequency response will therefore be produced. The viscoelastic elements utilized in the damper of the present invention are preferably comprised of natural rubber, butyl rubber, polybutyl rubber or other blends of rubbers. It has been found that a blend of fifty percent natural rubber and fifty percent polybutadiene performs satisfactorily. Other viscoelastic materials suitable for use in the damper of this invention will be apparent to the skilled in the art in view of this disclosure.

Figures 5 and 6 show additional constructions for the space frame. In the construction shown in Figure 5, a viscoelastic core is sandwiched between two relatively inelastic structural layers comprised of a material such as mild steel. In Figure 6, a single layer of viscoelastic material is bonded to a single layer of relatively inelastic structural material. In the event that the anterior and posterior legs are constructed according to either of Figures 5 or 6, the space frame will itself produce viscoelastic and hysteretic damping due to the introduction of additional viscoelastic materials 28 and 48. Tuning of a damper produced with laminated anterior and posterior legs according to Figure 5 or 6 may be accomplished in the identical manner to that previously described for a damper having only a hysteretic damping capability in the space frame.

Those skilled in the art will appreciate after reading this disclosure that changing the vertical position of mass block 18 or the magnitude of mass block 18 will change the magnitude of the frequency responses of the vibration damper of the present invention without necessarily changing the frequency ratios of the damping produced in the various directions by this device. Mass 18 may be repositioned on posterior leg 16 by merely unclamping the mass from the leg by removing or loosening fasteners positioned through apertures 19a and 19b.

Figure 7 illustrates an alternative embodiment of the vibration damper of the present invention in which the anterior and posterior legs are separately formed and connected at their lower extremity by lower beam member 34. A plurality of fasteners 30 and 32 is used to attach the legs to the mounting bracket beams 10a and 10b and lower beam member 34 respectively. Thus, beams 10a and 10b comprise a bracket for mounting the damper to a machine. The tuning mass comprises mass block 18 having sections 18a and 18b as before. The location of the mass block along posterior leg 16 may be varied as previously described in order to change the relative magnitude of the frequency response of the present damper. This is done by loosening set screw 36, which is used to lock mass 18 along posterior leg 16.

Figures 8-11 illustrate various configurations for the anterior and posterior legs. It has been found that the frequency response characteristics of the instant damper may be altered by substituting legs having various configurations. For example, with both legs being fabricated of mild steel and having the shape shown in Figure 8, resonant frequencies in the vertical, lateral, and longitudinal directions of 324, 28, and 66 cycles per second were observed by accelerometers attached to the space frame. However, when the posterior leg was changed to a leg having the shape shown in Figure 9, the observed frequencies were 392, 102 and 80.

The damper shown in Figure 7 is particularly useful for development testing as an aid for determining damper configurations suitable for the particular machine at hand. Once the desired configuration has been identified, a damper having relatively fixed characteristics may be constructed according to this invention. Those skilled in the art will appreciate that the damper of the present invention may be constructed of numerous materials including ferrous and non-ferrous metals, various fiber composite materials, and various viscoelastic materials. In view of this disclosure, those skilled in the art will further appreciate that the vibration damper of the present invention may be used with any vibrating member of, for example, a motor vehicle, such as a driveshaft, a differential gear housing, or the like. In any case, the damper must be mounted in a position such that it will be sujected to vibration having a sufficient amplitude to excite the damper at the frequencies which are being damped.

**Claims**

1. A vibration damper for a machine comprising a damping mass (18a,18b) suspension means, (10a,10b,14, 16) for suspending said damping mass (18a,18b) from said machine so as to produce damping within said suspension means when said damper is vibrated by said machine, and means (20a,20b) for elastically mounting said damping mass (18a,18b) to said suspension means.

2. A vibration damper according to Claim 1, wherein said suspension means comprises a viscoelastic damping element.

3. A vibration damper according to Claim 1, wherein said suspension means comprises a hysteretic damping element.

4. A vibration damper according to Claim 1, wherein said suspension means comprises both hysteretic and viscoelastic damping elements.

5. A vibration damper according to Claim 1, wherein said suspension means comprises at least one generally horizontal mounting bracket beam and anterior and posterior legs depending from said mounting bracket beam.

6. A vibration damper according to Claim 5, wherein said mounting bracket beam and said anterior and posterior legs are tuned to dampen vibrations at three or fewer separate frequencies.

7. A vibration damper according to Claim 1, wherein said means for elastically mounting said damping means to said suspension means comprises one or more viscoelastic elements interposed between said damping mass and said suspension means.

8. A vibration damper according to Claim 7, wherein said viscoelastic elements are tuned to dampen vibrations at three separate frequencies.

9. A vibration damper according to Claim 1, wherein said suspension means comprises a space frame.

10. A vibration damper according to Claim 9, wherein said space frame comprises one or more structural elements with each such element tuned to dampen vibration at a particular frequency.

11. A vibration damper according to Claim 9, wherein the damping frequencies of said damper can be adjusted by changing the location at which said tuning mass is mounted to said space frame.

12. A vibration damper according to Claim 9, wherein said space frame comprises one or more structural sections having laminated construction.

13. A vibration damper according to Claim 12, wherein said one or more structural sections having laminated construction, each comprising a core of viscoelastic material interposed between two relatively inelastic structural layers.

14. A vibration damper according to Claim 12, wherein said one or more structural sections having laminated construction, each comprising a layer of viscoelastic material bonded to a relatively inelastic structural layer.

15. A vibration damper according to Claim 9, wherein the location of said damping mass is adjustable with respect to said space frame.

16. A vibration damper according to Claim 9, wherein said tunable space frame is mounted to the transmission extension housing of an automotive vehicle.

17. A vibration damper according to Claim 9, including a bracket for mounting said damper to an automotive vehicle and means for adjustably mounting said damping mass to at least one of said tunable legs and wherein said space means includes two or more tunable legs depending from said bracket.

18. A vibration damper according to Claim 17, wherein said means for adjustably mounting said damping mass comprises means for fixing the location of said mass at a predetermined distance from said bracket.

19. A vibration damper according to Claim 17, wherein each of said tunable legs is independently replaceable for tuning purposes.

86306716 1

FIG. 1.

FIG. 2.

FIG.8. FIG.9. FIG.10. FIG.11.

FIG.3.

FIG.6.

FIG.5.

FIG.4.

FIG.7.